(19) Europäisches Patentamt
European Patent Office
Office européen des brevets

(11) Publication number: **0 612 796 A1**

(12) # EUROPEAN PATENT APPLICATION

(21) Application number: **94810086.2**

(22) Date of filing: **15.02.94**

(51) Int. Cl.[5]: **C08K 5/3435,** C09B 67/00, C09B 67/20, C08K 5/3492, C08K 5/3445, C08K 5/42

(30) Priority: **23.02.93 EP 93810122**

(43) Date of publication of application: **31.08.94 Bulletin 94/35**

(84) Designated Contracting States: **CH DE ES FR GB IT LI NL**

(71) Applicant: **CIBA-GEIGY AG**
**Klybeckstrasse 141**
**CH-4002 Basel (CH)**

(72) Inventor: **Chassot, Laurent, Dr.**
**CH-1724 Praroman (CH)**

(54) **Stabilisation of organic pigments.**

(57) Pigment compositions comprising

a) at least one organic pigment chosen from the group comprising azo pigments, quinacridones, phthalocyanines, indanthrones, flavanthrones, pyranthrones, anthraquinones, perylenes, dioxazines, perinones, thioindigo, isoindolines, isoindolinones and metal complexes and

b) 1 to 100% by weight, based on the pigment, of an N-hydrocarbyloxy amine consisting of at least one unsubstituted or substituted 5-, 6- or 7-membered heterocyclic ring containing a divalent group of the formula

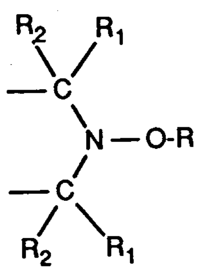 (I) or 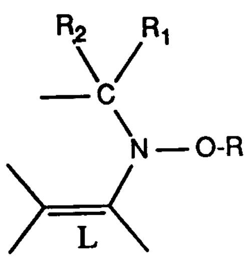 (II),

in which
R is $C_1$-$C_{18}$alkyl, $C_2$-$C_{12}$alkenyl, $C_2$-$C_{12}$alkynyl, $C_5$-$C_{12}$cycloalkyl, $C_6$-$C_{10}$aryl or $C_7$-$C_{12}$aralkyl,
$R_1$ and $R_2$ independently of one another are methyl, ethyl or phenyl, or together form a 4- to 12-membered aliphatic ring, and
L is an aromatic radical.

These pigment compositions are distinguished by an outstanding resistance to light and weathering.

EP 0 612 796 A1

The present invention relates to the stabilisation of organic pigments against the influence of light and weather by the addition of an N-hydrocarbyloxy amine.

It is known that not all organic pigments always have a very good fastness to light and weathering. Nevertheless, some of them have proved to be valuable pigments. Although they already have a very good resistance to light and weathering, it has now been found that, surprisingly, this can be improved further, in transparent as well as in opaque pigment forms, if the pigments are mixed with an N-hydrocarbyloxy amine.

N-hydrocarbyloxy amines, in particular an N-hydrocarbyloxy derivatives of HALS (Hindered Amine Light Stabiliser), have been disclosed e.g. in US Patents 4 921 962, 5 019 613, 5 021 483, 5 021 486, 5 021 577 and in EP-A 389 428 as light stabilisers for polymers against the degradative effects of actinic stimuli. They were found particularly effective in stabilising organic materials such as polyolefins, elastomers, polyvinyl chloride, polyesters, polyurethanes, ambient cured and acid catalysed thermoset coatings and enamels.

EP-A 309 401 discloses the use of N-hydroxy-HALS for preventing deficiencies such as embrittlement, cracking, corrosion, erosion, loss of gloss, chalking and yellowing of coatings containing some specific organic pigments such as phthalocyanine and azo pigments.

It has now been found, quite surprisingly, that even the already high resistance of certain pigments to light and weathering can be improved further by mixing or coating of the pigment particles with an N-hydrocarbyloxy amine.

The present invention accordingly relates to light-stabilised pigment compositions comprising

a) at least one organic pigment chosen from the group comprising azo pigments, quinacridones, phthalocyanines, indanthrones, flavanthrones, pyranthrones, anthraquinones, perylenes, dioxazines, perinones, thioindigo, isoindolines, isoindolinones and metal complexes and

b) 1 to 100% by weight, based on the pigment, of an N-hydrocarbyloxy amine consisting of at least one unsubstituted or substituted 5-, 6- or 7-membered heterocyclic ring containing a divalent group of the formula

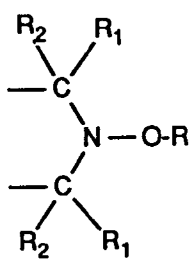 (I) or 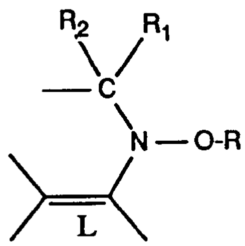 (II),

in which

R is $C_1$-$C_{18}$alkyl, $C_2$-$C_{12}$alkenyl, $C_2$-$C_{12}$alkynyl, $C_5$-$C_{12}$cycloalkyl, $C_6$-$C_{10}$aryl or $C_7$-$C_{12}$aralkyl,

$R_1$ and $R_2$ independently of one another are methyl, ethyl or phenyl, or together form a 4- to 12-membered aliphatic ring, and

L is an aromatic radical.

Particularly suitable pigments are those of the isoindoline, isoindolinone, metal complex, monoazo and, in particular, the bisazo, quinacridone, phthalocyanine, anthraquinone and perylene series. These are generally known and in some cases commercially obtainable products.

N-hydrocarbyloxy amine are likewise known compounds. Any that are still novel can be prepared in analogy to well known methods.

The N-hydrocarbyloxy amine is preferably employed in an amount of 5-100% by weight, based on the pigment.

$R_1$ and $R_2$ are preferably methyl.

Pigment compositions which are of particular interest are those in which an N-hydrocarbyloxy amine of the formula

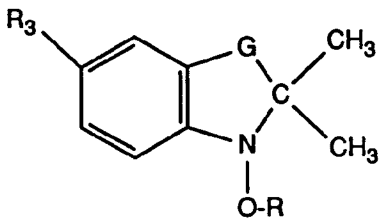

(III),

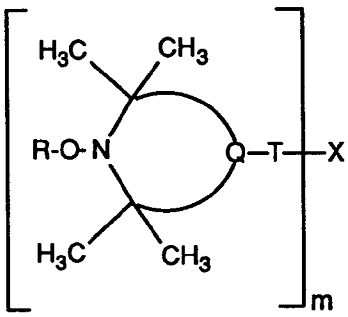

(IV),

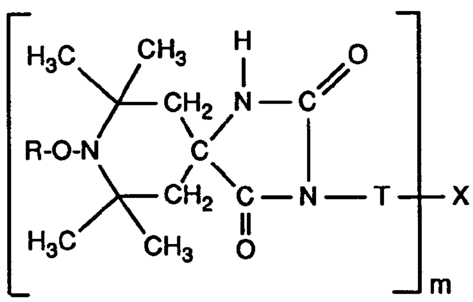

(V),

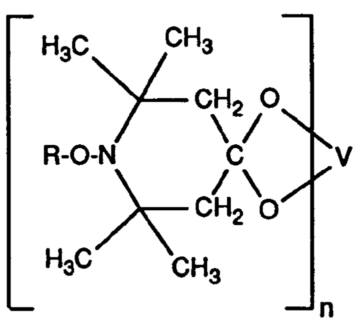

(VI)

or

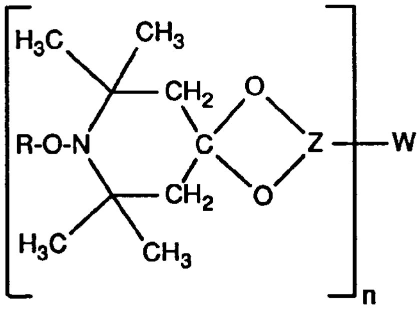

(VII)

is used, in which
R is tert.-butyl, $C_7$-$C_{18}$alkyl or $C_5$-$C_6$cycloalkyl,
$R_3$ is $C_1$-$C_{18}$alkyl or $C_1$-$C_{18}$alkoxy,
G is a divalent group of the formula $-CR_4=CH-$ or $-CHR_4-CH_2-$ and
$R_4$ is $C_1$-$C_{18}$alkyl,
Q is a group of the formula

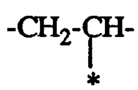 , 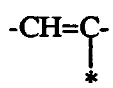 , 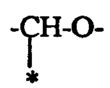 , 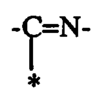 , 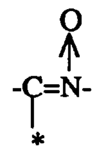 , 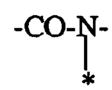 ,

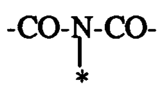 , 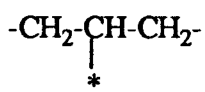 , 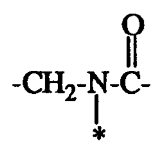 ,

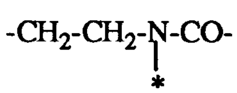 , 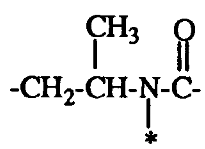 or 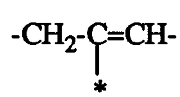

in which the bond labelled ∗ is the bond leading to T,
T is a direct bond or a group of the formula

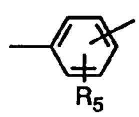 ,

in which $R_5$ is hydrogen, halogen or $C_1$-$C_4$alkyl, or $-(CH_2)_r-$,
in which r is 1 or 2,
m is the number 1, 2, 3, 4 or 6,
X, if m = 1, is hydrogen, $C_1$-$C_{18}$alkyl, phenyl which is unsubstituted or substituted by $C_1$-$C_4$alkyl, $C_1$-$C_4$alkoxy, phenyl or halogen, or, under the condition that T, if bonded to a nitrogen atom, is not a direct bond, is a group of the formula $-OCO-NR_5R_7$, $-OSO_2-NR_5R_7$, $-OCO-R_7$, $-COOR_7$, $-CONR_5R_7$, $-NR_5-COR_7$, $-NR_6-CONR_5R_7$, $-OR_7$, $-NR_6R_7$ or

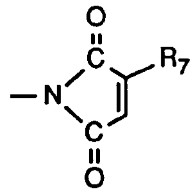 or 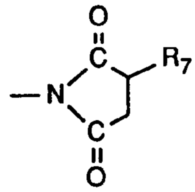 ,

in which $R_6$ is hydrogen or $C_1$-$C_{18}$alkyl, $R_7$ is $C_1$-$C_{18}$alkyl, $C_2$-$C_{12}$alkenyl, $C_5$-$C_{12}$cycloalkyl, or phenyl or naphthyl which is unsubstituted or substituted by $C_1$-$C_4$alkyl, $C_1$-$C_4$alkoxy, halogen, phenyl or nitro, or a group $-(CH_2)_s-CHR_8R_9$, s is zero, 1, 2 or 3, $R_8$ is hydrogen, methyl or phenyl and $R_9$ is -OH, halogen or a group $-COOCH_3$ or $-COOC_2H_5$ and,

if m = 2, is a group of the formula $-(CH_2)_p-$ or, under the condition that T, if bonded to a nitrogen atom, is not a direct bond, is a group of the formula $-O-(CH_2)_p-O-$, $-NR_8-(CH_2)_p-NR_8-$, -OCO-F-COO-, $-NR_6-CO-F-CO-NR_6-$, -OCO-NH-F-NH-COO- or $-NR_8-CONH-F-NHCO-NR_6-$, in which F is $-(CH_2)_p-$,

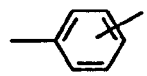

or

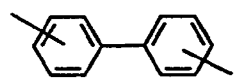 ,

and p is a number between 2 and 10, and,
if m = 3, is a group

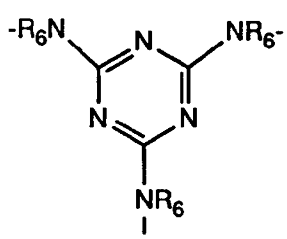 , 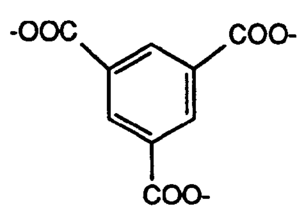 or 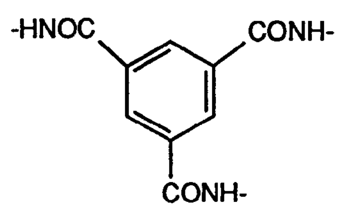

and, if m = 4, is a group

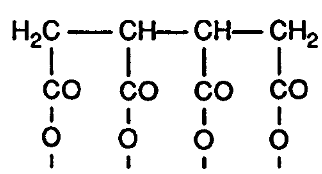

and
if m = 6, is a group

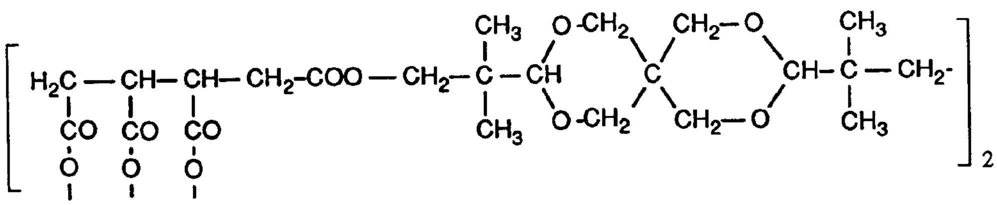

n is the number 1 or 2,

V, if n = 1, is $C_2$-$C_8$alkylene or hydroxyalkylene or $C_4$-$C_{22}$acyloxyalkylene, and, if n = 2, is the group $(-CH_2)_2C(CH_2-)_2$ or

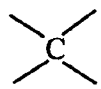 ,

and

Z is a group of the formula

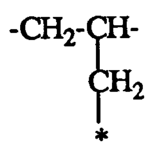 or 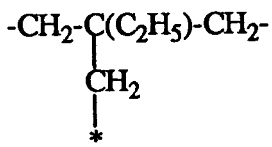

in which the bond labelled with * is the bond leading to W, and

W, if n = 1, is a group $-OCOR_{10}$, in which $R_{10}$ is $C_1$-$C_{18}$alkyl, or phenyl or naphthyl which is unsubstituted or substituted by $C_1$-$C_4$alkyl, $C_1$-$C_4$alkoxy or halogen, and,

if n = 2, is a group of the formula $-OCO-(CH_2)_p-COO-$ or

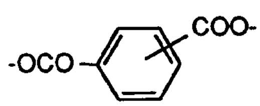 .

Any $C_1$-$C_4$alkyl substituents are, for example, methyl, ethyl, n-propyl, isopropyl, n-butyl, sec-butyl or tert-butyl, and any $C_1$-$C_{18}$alkyl substituents are additionally, for example, n-amyl, tert-amyl, hexyl, heptyl, octyl, 2-ethylhexyl, decyl, dodecyl, tetradecyl, hexadecyl or octadecyl;

$C_1$-$C_4$alkoxy is, for example, methoxy, ethoxy, n-propoxy, isopropoxy or butoxy, and $C_1$-$C_{18}$alkoxy is additionally, for example, hexyloxy, decyloxy, dodecyloxy, hexadecyloxy or octadecyloxy;

halogen is, for example, iodine, fluorine or, in particular, bromine, and preferably chlorine;

any $C_2$-$C_{12}$alkenyl substituents are, for example, vinyl, allyl, methallyl, 2-butenyl, 2-hexenyl, 3-hexenyl, 2-octenyl or 2-dodecenyl. Alkynyl is preferably propargyl.

$C_6$-$C_{10}$aryl R is, for example, phenyl, naphthyl or tolyl and $C_7$-$C_{12}$aralkyl R is, for example, benzyl, α-methylbenzyl or α,α-dimethylbenzyl.

$R_7$ as $C_5$-$C_{12}$cycloalkyl is, for example, cyclopentyl, cycloheptyl, cyclooctyl, cyclononyl, cyclododecyl and, preferably, cyclohexyl.

V as $C_2$-$C_8$alkylene or -hydroxyalkylene is, for example, ethylene, 1-methyl-ethylene, propylene, 2-ethylpropylene or 2-ethyl-2-hydroxymethylpropylene, and V as $C_4$-$C_{22}$acyloxyalkylene is, for example, 2-ethyl-2-acetoxymethylpropylene.

Pigment compositions in which an N-hydrocarbyloxy amine of the formula IV, V or VI, as defined above, is used are of very special interest.

Particularly suitable N-hydrocarbyloxy amine are those of the formula

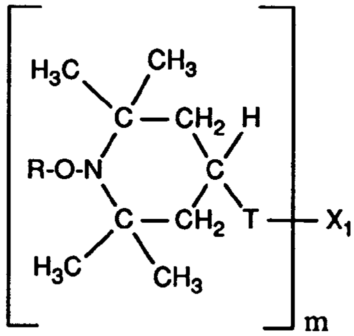

(VIII),

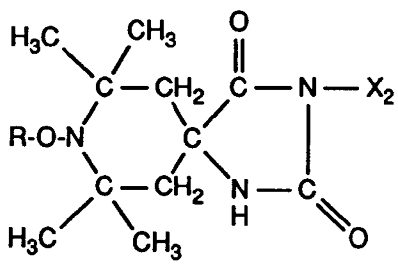

(IX)

or

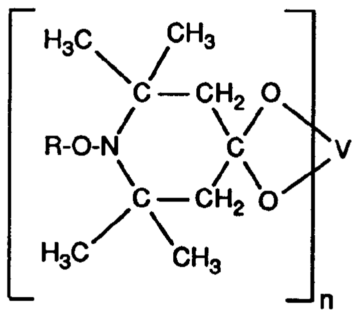

(X),

in which

R is as defined in the preferred meaning cited above,

T is a direct bond,

m is 1, 2 or 3,

$X_1$, if m = 1, is $C_1$-$C_{18}$alkyl, -OCO-$R_7$, -$NR_6$-$COR_7$ or

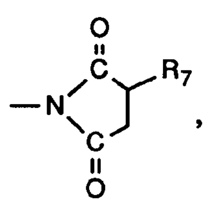

,

in which $R_6$ is hydrogen or $C_1$-$C_{18}$alkyl and $R_7$ is $C_1$-$C_{18}$alkyl, or phenyl or naphthyl which is unsubstituted or substituted by $C_1$-$C_4$alkyl, $C_1$-$C_4$alkoxy, phenyl or halogen, and, if m = 2, is a group -OCO-$(CH_2)_p$-OCO- or -$NR_6$CO-$(CH_2)_p$-$CONR_{15}$-, in which p is a number between 2 and 8,

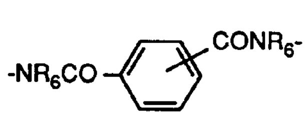

or

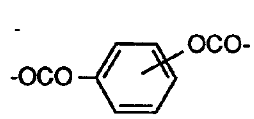

,

and,
if m = 3, is a group

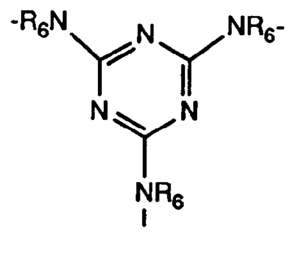

or

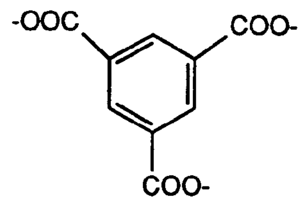

$X_2$ is $C_1$-$C_{18}$alkyl,
n is the number 2, and
V is the group $(-CH_2)_2C(CH_2-)_2$ or

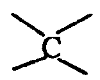 .

N-hydrocarbyloxy amines of the formula VIII or IX, in which R is tert-butyl, n-heptyl, n-octyl or cyclohexyl, T is a direct bond, $X_1$, if m is 1, is benzoyloxy or naphthoyloxy, if m is 2, is a group $-OCO-(CH_2)_p-OCO-$ in which p is a number between 2 and 8, and $X_2$ is $C_8$-$C_{18}$alkyl, are preferred.

As already mentioned above, the pigments are stabilised against the action of light and weather, which can lead either to fading or also to darkening of the colourations, by admixing with an N-hydrocarbyloxy amine. The admixing, according to the invention, of the N-hydrocarbyloxy amine with the pigment has proved to be effective, i.e. stabilising, in both cases. The invention furthermore accordingly relates to a process for light- and weather-stabilisation of pigments chosen from the group comprising azo pigments, quinacridones, phthalocyanines, indanthrones, flavanthrones, pyranthrones, anthraquinones, perylenes, dioxazines, perinones, thioindigo, isoindolines, isoindolinones and metal complexes comprising mixing or coating the pigment particles with 1 to 100% by weight, based on the pigment, of an N-hydrocarbyloxy amine consisting of at least one unsubstituted or substituted 5-, 6- or 7-membered heterocyclic ring containing a divalent group of the formula

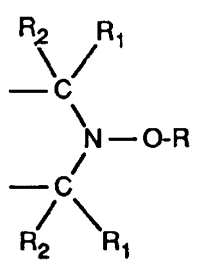 (I) or 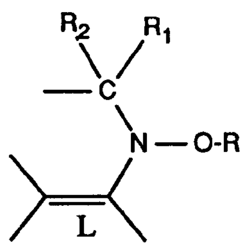 (II),

in which
R is $C_1$-$C_{18}$alkyl, $C_2$-$C_{12}$alkenyl, $C_2$-$C_{12}$alkynyl, $C_5$-$C_{12}$cycloalkyl, $C_6$-$C_{10}$aryl or $C_7$-$C_{12}$aralkyl,
$R_1$ and $R_2$ independently of one another are methyl, ethyl or phenyl, or together form a 4- to 12-membered aliphatic ring, and
L is an aromatic radical.

This can be effected by the following various methods:

- The N-hydrocarbyloxy amine is dissolved in an organic solvent in the desired amount. The pigment is suspended in this solution by customary methods and, if appropriate, the resulting suspension is dispersed in a conventional mill. The pigment mixture is isolated by distilling off the solvent and then drying;
- The required amount of N-hydrocarbyloxy amine, dissolved in an organic solvent, is added to a pigment suspension prepared by customary methods and is then precipitated and also suspended by the addition of a solvent in which it is not soluble, for example water. The suspension is then filtered and the pigment mixture is isolated by customary methods;
- Preferably, however, the pigment and the N-hydrocarbyloxy amine are incorporated in the desired amount by customary methods, either in premixed form or separately, into the substrate to be pigmented.

Preferred N-hydrocarbyloxy amines for this process are as defined above.

The pigment compositions according to the invention are excellently suitable as pigments for colouring high molecular weight organic material, especially if high requirements of resistance to light and weathering are imposed.

High molecular weight organic materials which can be pigmented with the pigment compositions according to the invention are, for example, cellulose ethers and esters, such as ethylcellulose, nitrocellulose, cellulose acetate and cellulose butyrate, naturally occurring resins or synthetic resins, such as polymerisation resins or condensation resins, such as aminoplasts, in particular urea- and melamine-formaldehyde resins, alkyd resins, phenolic resins, polycarbonates, polyolefins, polystyrene, polyvinyl chloride, polyamides, polyurethanes, polyesters, ABS, polyphenylene oxides, rubber, casein, silicone and silicone resins, individually or as mixtures.

The pigment compositions according to the invention are particularly suitable for colouring polyvinyl chloride and polyolefins, such as polyethylene and polypropylene, and for pigmenting varnishes, paints and printing inks. Due to their high light fastness, however, they are also particularly suitable for use in electrophotographic materials (for example photocells), colour filters (for example liquid crystal displays), information storage materials (optical discs), non-linear optical materials and in optical limiters.

However, the pigment compositions according to the invention are preferably suitable for colouring aqueous and/or solvent-containing varnishes, in particular automotive paints.

They are especially preferably used for effect finishes in which transparent organic pigments are employed.

The high molecular weight organic compounds mentioned can be present individually or in mixtures as plastic compositions, melts or in the form of spinning solutions, varnishes, paints or printing inks. Depending on the intended use, it proves advantageous to employ the pigment compositions according to the invention as toners or in the form of preparations.

The pigment compositions according to the invention can be employed in an amount of 0.01 to 40% by weight, preferably 0.1 to 20% by weight, based on the high molecular weight organic material to be pigmented.

The high molecular weight organic substances are pigmented with the pigment compositions according to the invention, for example, by admixing such a pigment composition, if appropriate in the form of masterbatches, or the individual components to these substrates using roll mills or mixing or grinding apparatuses. The pigmented material is then brought into the desired final form by processes which are known per se, for example calendering, pressing, extrusion, brushing, casting or injection moulding. To produce non-rigid mouldings or to reduce their brittleness, it is often desirable to incorporate so-called plasticisers into the high molecular weight compounds before shaping. Plasticisers can be, for example, esters of phosphoric acid, phthalic acid or sebacic acid. The plasticisers can be incorporated into the polymers before or after incorporation of the pigment compositions according to the invention. In order to achieve various colour shades, it is furthermore possible also to add fillers or other chromophoric components, such as white, coloured or black pigments, in any amounts to the high molecular weight organic substances, in addition to the pigment compositions according to the invention.

For pigmenting varnishes, paints and printing inks, the high molecular weight organic materials and the pigment compositions according to the invention are finely dispersed or dissolved in a common organic solvent or solvent mixture, if appropriate together with additives, such as fillers, other pigments, siccatives or plasticisers. A procedure can be followed here in which the individual components are dispersed or dissolved by themselves, or also several of them together, and only then are all the components brought together.

In colourations, for example of varnishes, polyvinyl chloride or polyolefins, the pigment compositions according to the invention are distinguished by good general pigment properties, such as good dispersibility, high tinctorial strength and purity, and good resistance to migration, heat and, in particular, light and weathering.

The following examples illustrate the invention. Parts are by weight, unless stated otherwise.

Example 1:

0.5 g of a scarlet red bisazo pigment (C.I. Pigment Red 166) of the formula

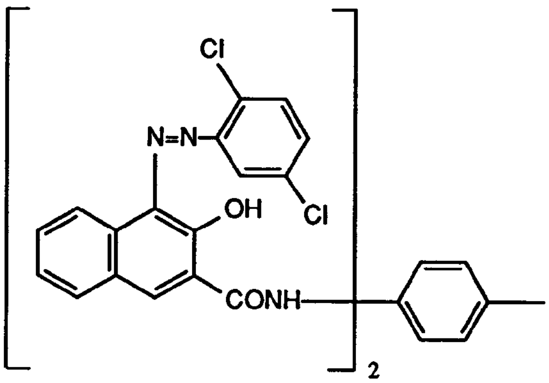

(XI)

and 0.05 g of an N-hydrocarbyloxy amine of the formula

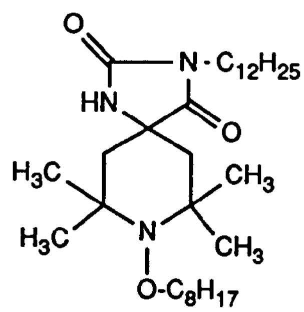

7.6 g of $TiO_2$, 3 g of xylene and 30 g of stoving lacquer comprising 56 parts of alkyd resin ®ALFTALAT AC 451M (Hoechst AG, 60 % in xylene/Solvesso 150* ), 23 parts of melamine resin ®MAPRENAL MF 600 (Hoechst AG, 65 % in n-butanol/isobutanol), 20 parts of xylene, and 1.0 part of silicone oil (1% in xylene) are mixed by customary methods. The coloured paint is applied to aluminium sheets and stoved at 130°C for 30 minutes.

A control coloured coating is likewise produced in the same manner, with the exception that the pigment is employed without addition of the N-hydrocarbyloxy amine.

The resistance of the resulting coloured coatings to weathering is determined in accordance with the WOM test according to DIN 53387 after weathering for 500 hours.

The colouration obtained with addition of the N-hydrocarbyloxy amine has a significantly better resistance to weathering than the control coloured coating.

Example 2:

Example 1 is repeated, with the only exception that instead of the pigment of the formula XI, the same amount by weight of the bisazo pigment (C.I. Pigment Yellow 93) of the formula

*®SOLVESSO 150, aromatic solvent from ESSO

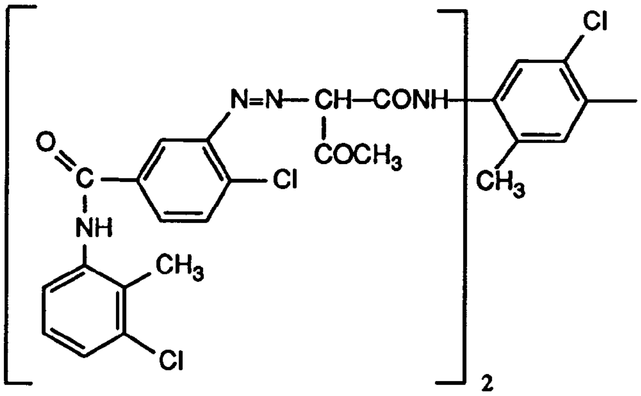

is employed. The coloured coating shows a significantly better resistance to weathering than the corresponding control coloured coating.

Examples 3-34:

0.4 g of one of the pigments shown in column 1 in the following Table 1 and 0.08 g of one of the N-hydrocarbyloxy amine shown in column 2 of Table 1 are incorporated separately, but otherwise in the same manner, into the same alkyd-melamine stoving enamel (white reduction) as described in Example 1 (method B). The resistance of the resulting coloured coatings and corresponding control coloured coatings without an N-hydrocarbyloxy amine to weathering is determined as described in Example 1. In all the examples shown, a better resistance to weathering can be detected than in the case of the corresponding control coloured coatings.

| Ex- | I | II |
|---|---|---|
| 3 | C.I. Pigment Orange 34 | 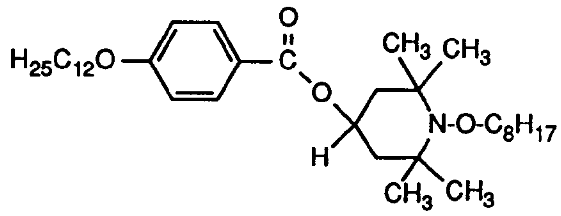 |
| 4 | C.I. Pigment Orange 34 | 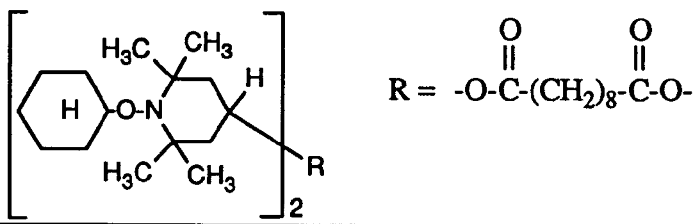 |
| 5 | C.I. Pigment Orange 34 | 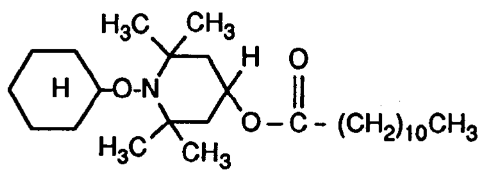 |
| 6 | C.I. Pigment Orange 34 | 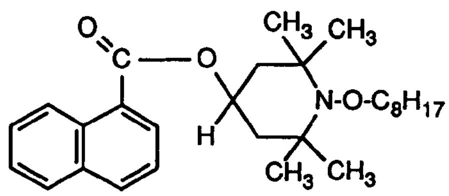 |
| 7 | C.I. Pigment Yellow 95 | 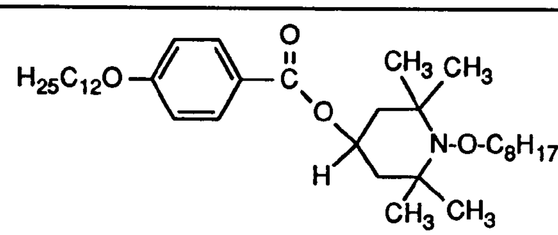 |
| 8 | C.I. Pigment Yellow 95 | 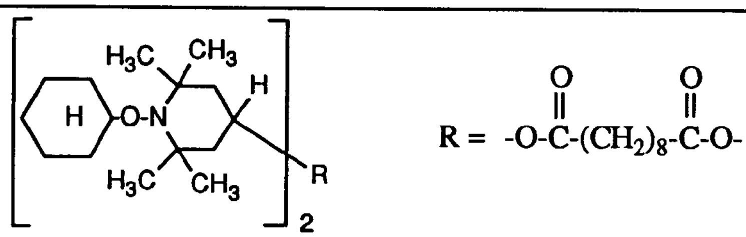 |
| 9 | C.I. Pigment Yellow 95 | 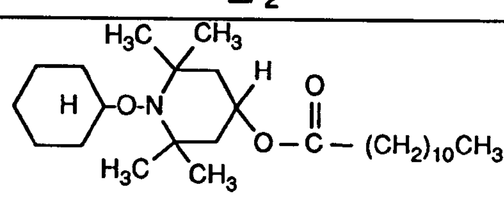 |

Table 1: (Continuation)

| Example | I | II |
|---|---|---|
| 10 | C.I. Pigment Yellow 95 | 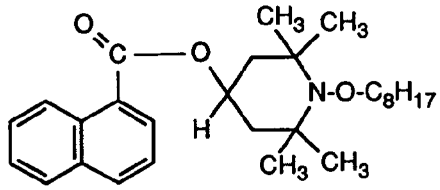 |
| 11 | C.I. Pigment Yellow 62 | 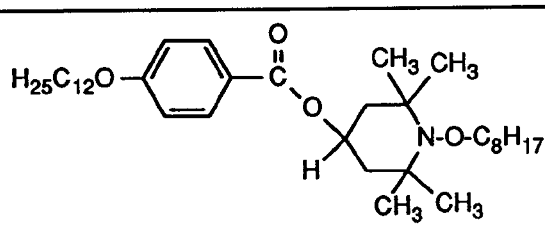 |
| 12 | C.I. Pigment Yellow 62 | 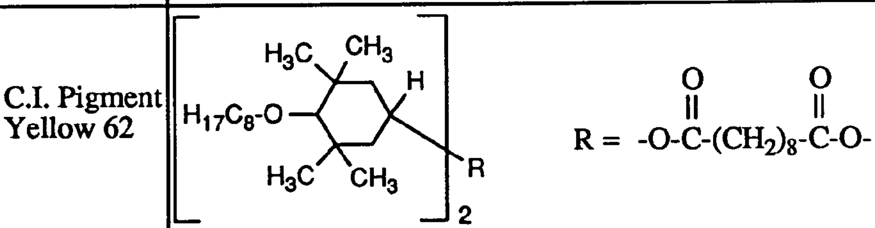 |
| 13 | C.I. Pigment Yellow 62 | 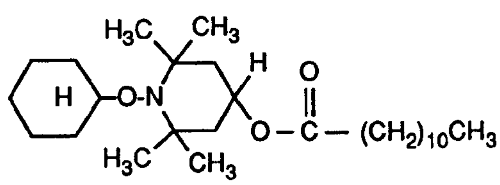 |
| 14 | C.I. Pigment Yellow 62 | 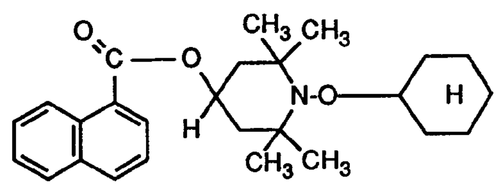 |
| 15 | C.I. Pigment Yellow 17 | 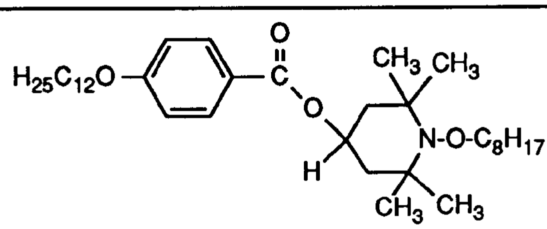 |
| 16 | C.I. Pigment Yellow 17 | 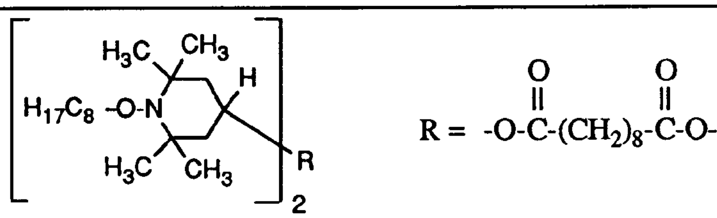 |

Table 1: (Continuation)

| Example | I | II |
|---|---|---|
| 17 | C.I. Pigment Yellow 17 | 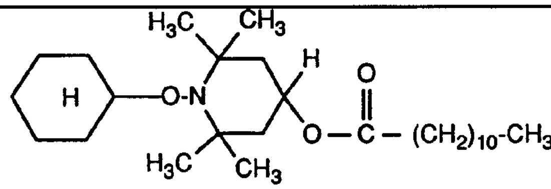 |
| 18 | C.I. Pigment Yellow 17 | 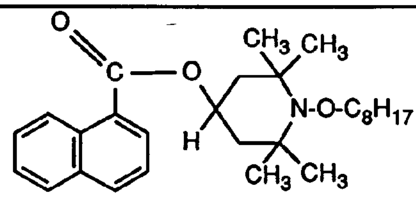 |
| 19 | C.I. Pigment Red 177 | 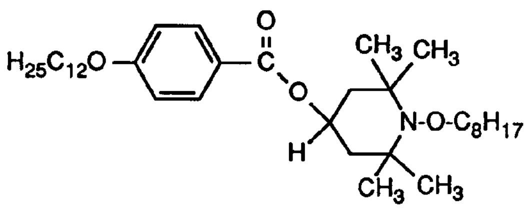 |
| 20 | C.I. Pigment Red 177 | 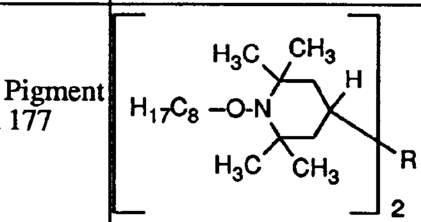 R = 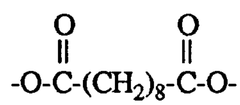 |
| 21 | C.I. Pigment Red 177 | 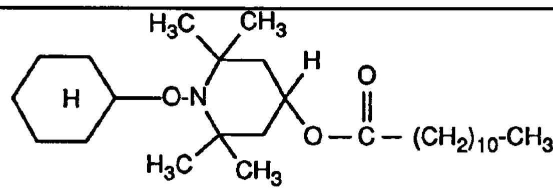 |
| 22 | C.I. Pigment Red 177 | 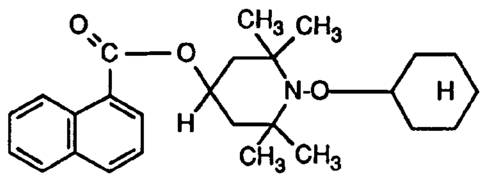 |
| 23 | C.I. Pigment Red 188 | 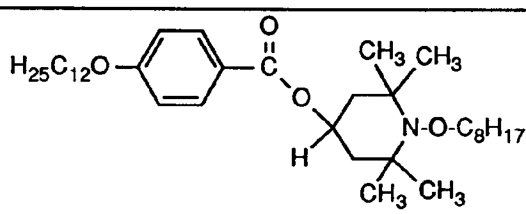 |

Table 1: (Continuation)

| Example | I | II |
|---|---|---|
| 24 | C.I. Pigment Yellow 188 | 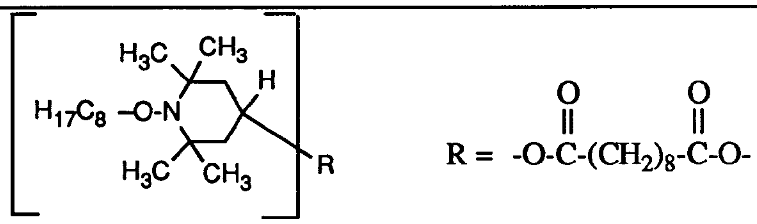 |
| 25 | C.I. Pigment Yellow 188 | 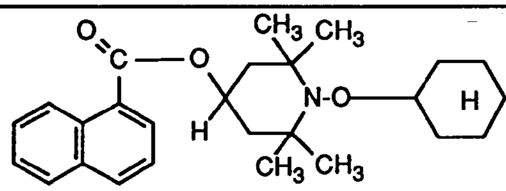 |
| 26 | C.I. Pigment Blue 15:4 | 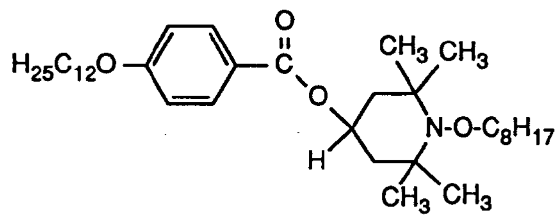 |
| 27 | C.I. Pigment Blue 15:4 | 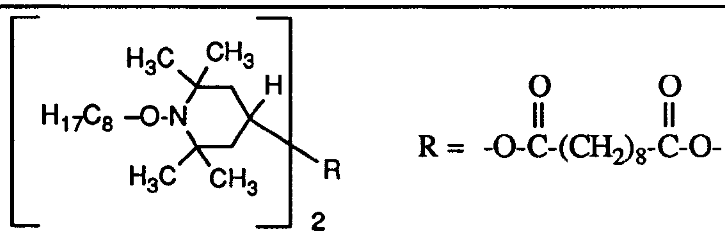 |
| 28 | C.I. Pigment Blue 15:4 | 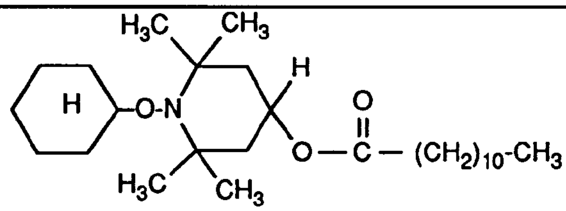 |
| 29 | C.I. Pigment Blue 15:4 | 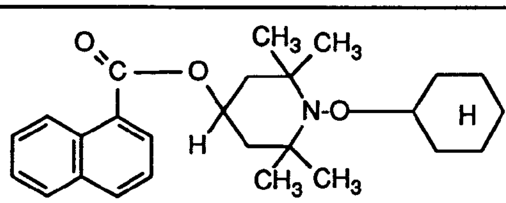 |

Table 1: (Continuation)

| Example | I | II |
|---|---|---|
| 30 | C.I. Pigment Red 170 | 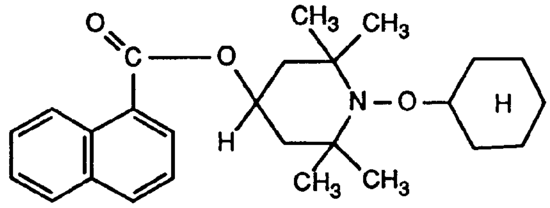 |
| 31 | C.I. Pigment Red 170 | 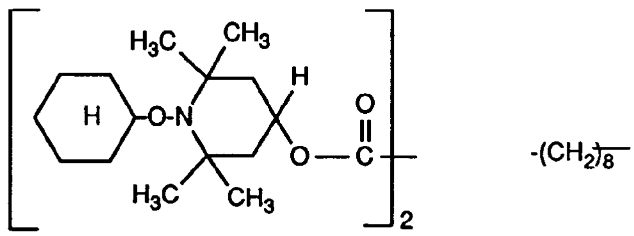 |
| 32 | C.I. Pigment Red 170 | 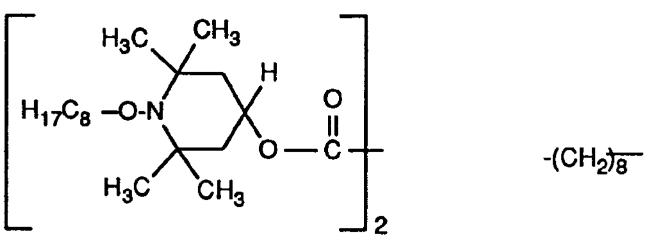 |
| 33 | C.I. Pigment Yellow 110 | 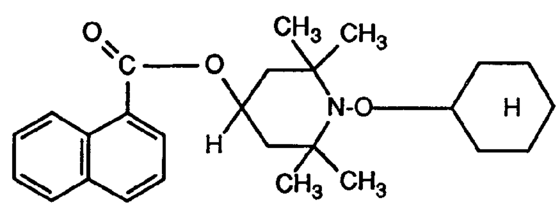 |
| 34 | C.I. Pigment Red 170 | 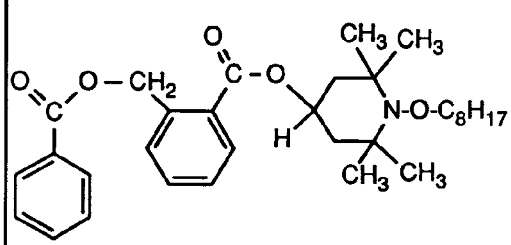 |

Examples 35-37:

0.7 g of C.I. Pigment Yellow 95 and 0.35 g of one of the N-hydrocarbyloxy amines shown in the following Table 2 are mixed in the dry state with 700 g of polyethylene VESTOLEN A 6016® (Hüls) and 1.4 g of calcium carbonate MILICARB®. The mixture is then extruded in a single-screw extruder twice at 200°C. The granules thus obtained are processed to sheets on an injection moulding machine at 200°C. The resistance to weathering is determined by weathering the sheets as described for the coloured coatings in Example 1. In all the examples, a better resistance to weathering can be determined than in the case of control sheets produced correspondingly without N-hydrocarbyloxy amines.

Table 2:

| Example | N-hydrocarbyloxy amine |
|---|---|
| 35 | 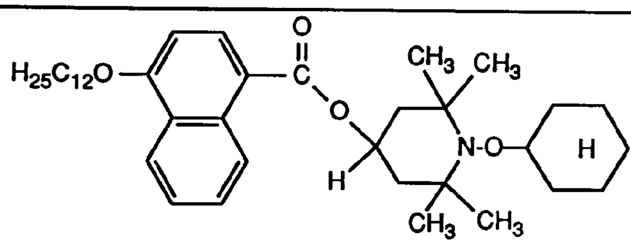 |
| 36 | 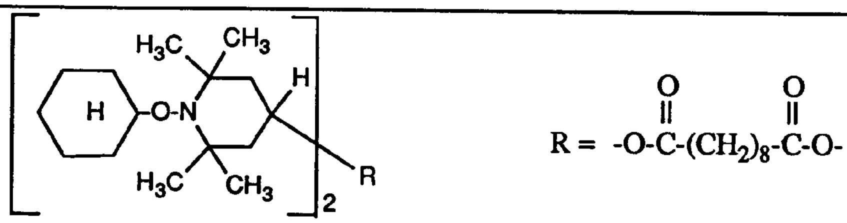 |
| 37 | 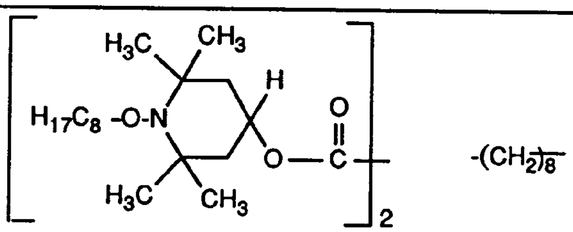 |

Examples 38-40:

0.5 g of C.I. Pigment Yellow 95, 0.1 g of one of the N-hydrocarbyloxy amines shown in the following Table 3 and 16.2 g of a nitrocellulose printing ink comprising 11 g of nitrocellulose A 250, 9 g of DOWANOL PM® (Dow Chem.), 20 g of ethyl acetate and 60 g of ethanol are mixed by customary methods. The resulting printing ink is spread onto paper. The resistance to weathering is determined by exposure of the colourations to light in accordance with the fadeometer test for 500 hours. In all the examples, a better resistance to weathering can be determined than in the case of control colourations produced correspondingly without N-hydrocarbyloxy amines.

Table 3:

| Example | Nitroxyl compound |
|---|---|
| 38 | 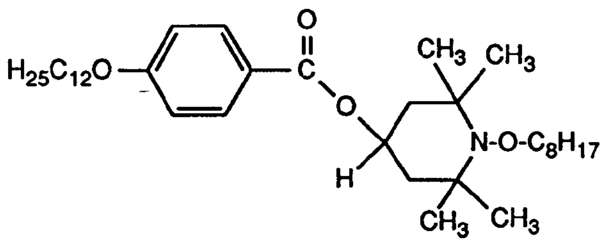 |
| 39 | 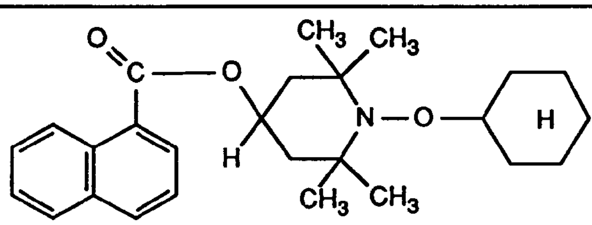 |
| 40 | 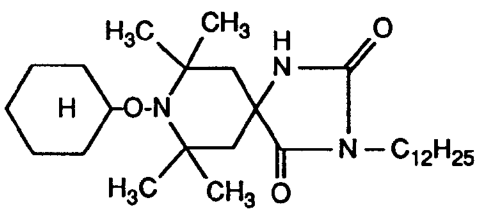 |

Examples 41-43:

Examples 38-40 are repeated with the only exception that instead of C.I. Pigment Yellow 95, the same amount by weight of C.I. Pigment Yellow 188 is used. A better light fastness than in the case of corresponding control colourations without a N-hydrocarbyloxy amine can also be determined in these examples.

The classes to which the pigments used in Examples 3-43 belong are shown in the following Table 4.

Table 4:

| C.I. designation | Pigment class |
|---|---|
| C.I. Pigment Yellow 17 | Bisazo pigment |
| C.I. Pigment Yellow 62 | Laked monoazo pigment |
| C.I. Pigment Yellow 95 | Bisazo condensation pigment |
| C.I. Pigment Yellow 110 | Isoindolinone pigment |
| C.I. Pigment Yellow 188 | Bisazo pigment |
| C.I. Pigment Orange 34 | Bisazo pigment |
| C.I. Pigment Red 170 | Monoazo pigment |
| C.I. Pigment Red 177 | Anthraquinone pigment |
| C.I. Pigment Blue 15:4 | Copper phthalocyanine pigment |

## Claims

1. A light-stabilised pigment composition comprising
   a) at least one organic pigment chosen from the group comprising azo pigments, quinacridones, phthalocyanines, indanthrones, flavanthrones, pyranthrones, anthraquinones, perylenes, dioxazines, perinones, thioindigo, isoindolines, isoindolinones and metal complexes and
   b) 1 to 100% by weight, based on the pigment, of an N-hydrocarbyloxy amine consisting of at least one unsubstituted or substituted 5-, 6- or 7-membered heterocyclic ring containing a divalent group of the formula

   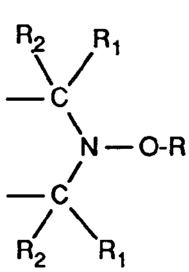 (I) or 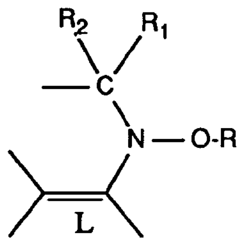 (II),

   in which
   R is $C_1$-$C_{18}$alkyl, $C_2$-$C_{12}$alkenyl, $C_2$-$C_{12}$alkynyl, $C_5$-$C_{12}$cycloalkyl, $C_6$-$C_{10}$aryl or $C_7$-$C_{12}$aralkyl,
   $R_1$ and $R_2$ independently of one another are methyl, ethyl or phenyl, or together form a 4- to 12-membered aliphatic ring, and
   L is an aromatic radical.

2. A pigment composition according to claim 1, wherein a pigment of the isoindoline, isoindolinone, metal complex, monoazo and, in particular, of the bisazo, quinacridone, phthalocyanine, anthraquinone and perylene series is used.

3. A pigment composition according to claim 1, wherein the N-hydrocarbyloxy amine is employed in an amount of 5-100% by weight, based on the pigment.

4. A pigment composition according to claim 1, wherein an N-hydrocarbyloxy amine containing at least one group of the formula I or II, in which $R_1$ and $R_2$ are methyl, is used.

5. A pigment composition according to claim 1, wherein an N-hydrocarbyloxy amine of the formula

   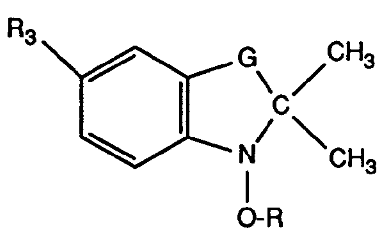 (III),

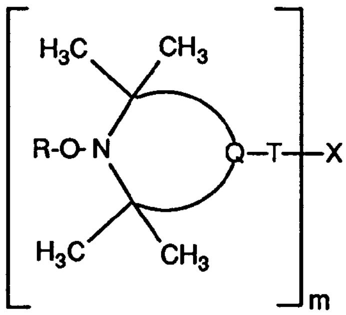

(IV),

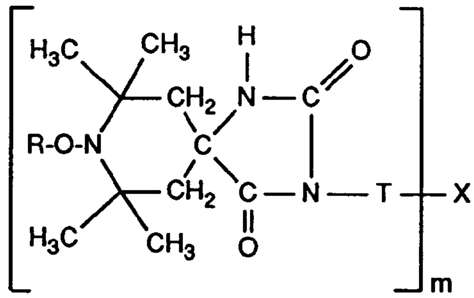

(V),

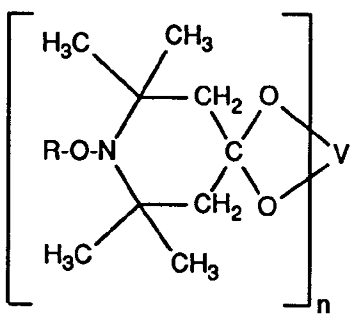

(VI)

or

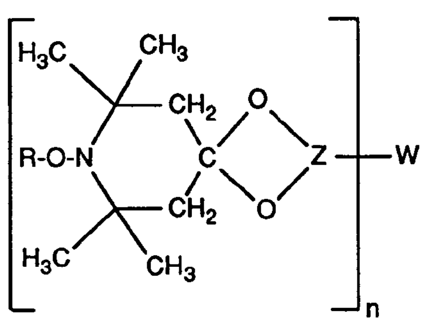

(VII)

is used, in which

R is tert.-butyl, $C_7$-$C_{18}$alkyl or $C_5$-$C_6$cycloalkyl,

$R_3$ is $C_1$-$C_{18}$alkyl or $C_1$-$C_{18}$alkoxy,

G is a divalent group of the formula $-CR_4=CH-$ or $-CHR_4-CH_2-$ and

$R_4$ is $C_1$-$C_{18}$alkyl,

Q is a group of the formula

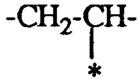 , 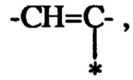 , 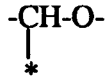 , 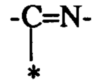 , 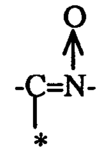 , 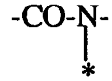 ,

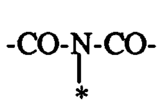 , 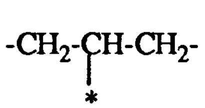 , 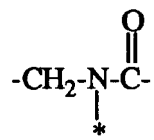 ,

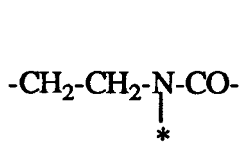 , 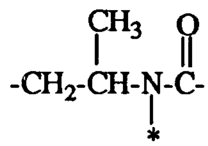 or 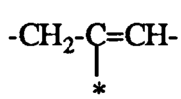

in which the bond labelled ∗ is the bond leading to T,
T is a direct bond or a group of the formula

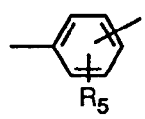 ,

in which $R_5$ is hydrogen, halogen or $C_1$-$C_4$alkyl, or $-(CH_2)_r-$,
in which r is 1 or 2,
m is the number 1, 2, 3, 4 or 6,
X, if m = 1, is hydrogen, $C_1$-$C_{18}$alkyl, phenyl which is unsubstituted or substituted by $C_1$-$C_4$alkyl, $C_1$-$C_4$alkoxy, phenyl or halogen, or, under the condition that T, if bonded to a nitrogen atom, is not a direct bond, is a group of the formula

$-OCO-NR_5R_7$, $-OSO_2-NR_6R_7$, $-OCO-R_7$, $-COOR_7$, $-CONR_5R_7$, $-NR_6-COR_7$, $-NR_6-CONR_6R_7$, $-OR_7$, $-NR_5R_7$ or

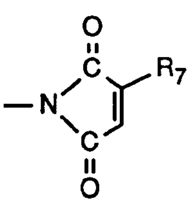 or 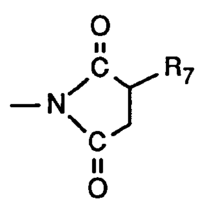 ,

in which $R_6$ is hydrogen or $C_1$-$C_{18}$alkyl, $R_7$ is $C_1$-$C_{18}$alkyl, $C_2$-$C_{12}$alkenyl, $C_5$-$C_{12}$cycloalkyl, or phenyl or naphthyl which is unsubstituted or substituted by $C_1$-$C_4$alkyl, $C_1$-$C_4$alkoxy, halogen, phenyl or nitro, or a group $-(CH_2)_s-CHR_8R_9$, s is zero, 1, 2 or 3, $R_8$ is hydrogen, methyl or phenyl and $R_9$ is -OH, halogen or a group $-COOCH_3$ or $-COOC_2H_5$ and,

if m = 2, is a group of the formula $-(CH_2)_p-$ or, under the condition that T, if bonded to a nitrogen atom, is not a direct bond, is a group of the formula $-O-(CH_2)_p-O-$, $-NR_6-(CH_2)_p-NR_5-$, -OCO-F-COO-, $-NR_6-CO-F-CO-NR_6-$, -OCO-NH-F-NH-COO- or $-NR_5-CONH-F-NHCO-NR_6-$, in which F is $-(CH_2)_p-$,

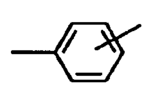

or

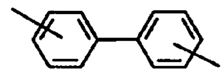 ,

and p is a number between 2 and 10, and,
if m = 3, is a group

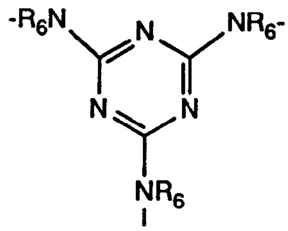 , 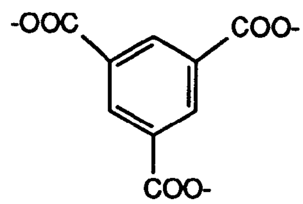 or 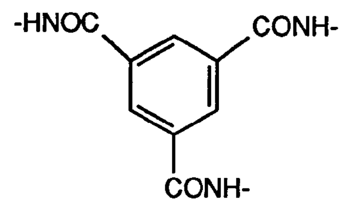

and, if m = 4, is a group

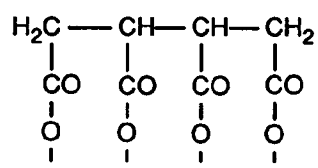

and
if m = 6, is a group

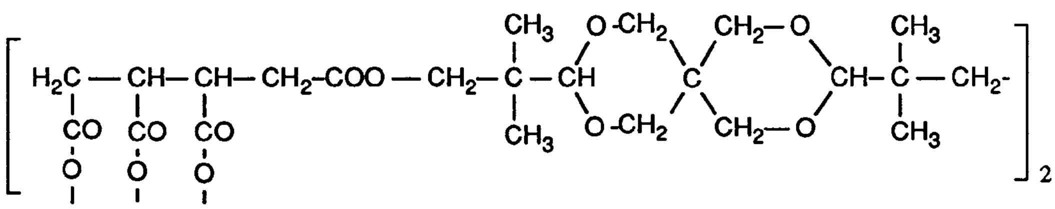

n is the number 1 or 2,

V, if n = 1, is $C_2$-$C_8$alkylene or hydroxyalkylene or $C_4$-$C_{22}$acyloxyalkylene, and, if n = 2, is the group $(-CH_2)_2C(CH_2-)_2$ or

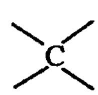 ,

and

Z is a group of the formula

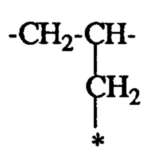 or 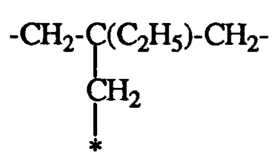

in which the bond labelled with ∗ is the bond leading to W, and

W, if n = 1, is a group $-OCOR_{10}$, in which $R_{10}$ is $C_1$-$C_{18}$alkyl, or phenyl or naphthyl which is unsubstituted or substituted by $C_1$-$C_4$alkyl, $C_1$-$C_4$alkoxy or halogen, and,

if n = 2, is a group of the formula $-OCO-(CH_2)_p-COO-$ or

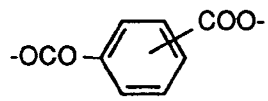

6. A pigment composition according to claim 5, wherein an N-hydrocarbyloxy amine of the formula IV, V or VI as defined in claim 5 is used.

7. A pigment composition according to claim 5, wherein an N-hydrocarbyloxy amine of the formula

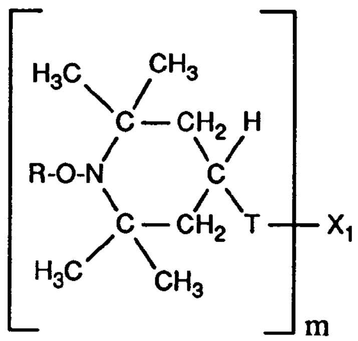

(VIII),

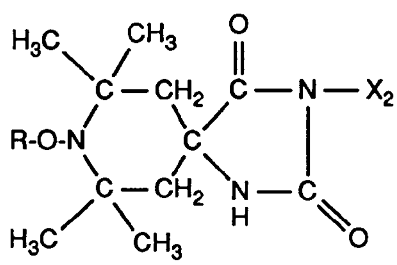

(IX)

or

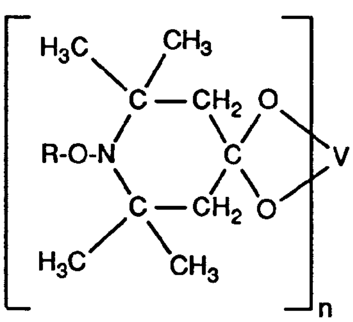

(X),

is used, in which
R is as defined in claim 5
T is a direct bond,
m is 1, 2 or 3,

$X_1$, if m = 1, is $C_1$-$C_{18}$alkyl, $-OCO-R_7$, $-NR_6-COR_7$ or

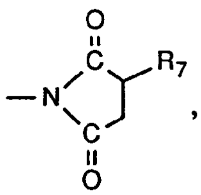,

in which $R_6$ is hydrogen or $C_1$-$C_{18}$alkyl and $R_7$ is $C_1$-$C_{18}$alkyl, or phenyl or naphthyl which is unsubstituted or substituted by $C_1$-$C_4$alkyl, $C_1$-$C_4$alkoxy, phenyl or halogen, and,
if m = 2, is a group $-OCO-(CH_2)_p-OCO-$ or $-NR_6CO-(CH_2)_p-CONR_{15}-$, in which p is a number between 2 and 8,

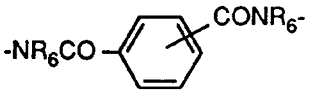 or 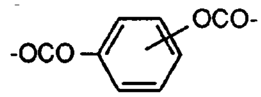,

and,
if m = 3, is a group

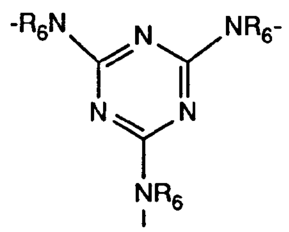 or 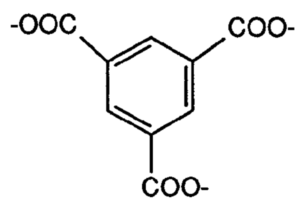

| | |
|---|---|
| $X_2$ | is $C_1$-$C_{18}$alkyl, |
| n | is the numher 2, and |
| V | is the group $(-CH_2)_2C(CH_2-)_2$ or |

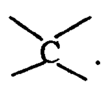.

8. A pigment composition according to claim 7, wherein an N-hydrocarbyloxy amine of the formula VIII or IX, is used in which R is tert-butyl, n-heptyl, n-octyl or cyclohexyl, T is a direct bond, $X_1$, if m is 1, is benzoyloxy or naphthoyloxy, if m is 2, is a group $-OCO-(CH_2)_p-OCO-$ in which p is a number between 2 and 8, and $X_2$ is $C_8$-$C_{18}$alkyl.

9. A process for light- and weather-stabilisation of pigments chosen from the group comprising azo pigments, quinacridones, phthalocyanines, indanthrones, flavanthrones, pyranthrones, anthraquinones, perylenes, dioxazines, perinones, thioindigo, isoindolines, isoindolinones and metal complexes comprising mixing or coating the pigment particles with 1 to 100% by weight, based on the pigment, of N-hydrocarbyloxy amine compound consisting of at least one unsubstituted or substituted 5-, 6- or 7-membered heterocyclic ring containing a divalent group of the formula

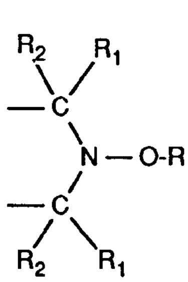 (I) or 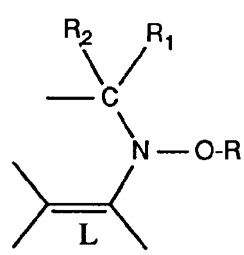 (II),

in which
R is $C_1$-$C_{18}$alkyl, $C_2$-$C_{12}$alkenyl, $C_2$-$C_{12}$alkynyl, $C_5$-$C_{12}$cycloalkyl, $C_6$-$C_{10}$aryl or $C_7$-$C_{12}$aralkyl,
$R_1$ and $R_2$ independently of one another are methyl, ethyl or phenyl, or together form a 4-to 12-membered aliphatic ring,
L is an aromatic radical.

**10.** A high molecular weight organic material comprising a pigment composition according to claim 1.

**11.** A high molecular weight organic material according to claim 10, which is a paint.

**12.** A high molecular weight organic material according to claim 11, which is an automotive finish.

European Patent Office

# EUROPEAN SEARCH REPORT

Application Number
EP 94 81 0086

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| X | US-A-5 176 751 (L. K. FINDLEY)<br>* examples 4-6 * | 1-3 | C08K5/3435<br>C09B67/00<br>C09B67/20<br>C08K5/3492<br>C08K5/3445<br>C08K5/42 |
| A | EP-A-0 195 898 (AMERICAN OPTICAL CORPORATION)<br>* claims 11-18 * | 1 | |
| A | EP-A-0 284 800 (THE B.F. GOODRICH COMPANY)<br>* page 8, line 40; claim 1 * | 1,10-12 | |
| D,A | EP-A-0 389 428 (CIBA-GEIGY AG)<br>* page 1, line 1 - page 5, line 11 * | 1,10-12 | |
| A | GB-A-2 236 536 (SANDOZ LTD)<br>* page 1, line 1 - page 8, line 9 *<br>* page 13, line 2 - line 9 * | 1 | |
| A | DE-A-22 64 582 (SANKYO CO. LTD.)<br>* page 1, line 1 - page 3, line 8 * | 1,10-12 | |

TECHNICAL FIELDS SEARCHED (Int.Cl.5)

C08K
C09B
G03C

The present search report has been drawn up for all claims

| Place of search | Date of completion of the search | Examiner |
|---|---|---|
| THE HAGUE | 28 June 1994 | Ketterer, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)